# EUROPEAN PATENT SPECIFICATION

(11) **EP 1 132 004 B1**
(45) Date of publication and mention of the grant of the patent: **07.04.2004**
(21) Application number: 01200798.5
(22) Date of filing: 22.02.2001
(51) Int. Cl.: A22C 17/00

(54) **Gouging machine for hams**
Maschine zum Ausbeinen von Schinken
Machine de gougeage de jambons

(30) Priority: 07.03.2000 IT RE000015; 06.11.2000 IT RE000110
(43) Date of publication of application: 12.09.2001
(73) Proprietor: MACCHINE SONCINI ALBERTO S.p.A., I-43013 Langhirano (Parma) (IT)
(72) Inventor: Galloni, Dino, 43010 Riano Di Langhirano(Parma) (IT); Galloni, Luciano, 43010 Riano Di Langhirano (Parma) (IT)
(74) Representative: Corradini, Corrado

(56) References cited:
- EP-A- 0 753 260
- EP-A- 0 882 404
- DE-U- 9 215 620

## Description

This invention relates to a machine for automatically gouging cured raw hams.

Said gouging is known to consist of an operation prior to deboning, and comprises detaching the meaty mass from the bone of the ham, in particular its thighbone, with the aid of a gouging tool commonly known as a gouger.

The publication EP 0753260 illustrates a gouging machine which comprises a bed for supporting the ham and for transferring it in front of several gouging stations, in each of which a gouger is guided along a rectilinear path so that it enters the ham and grazes the thighbone to detach it from the meat.

However, this machine presents operational drawbacks consisting firstly of the fact that the path along which the gouging tool is guided is a rectilinear path which does not properly conform to the shape of the thighbone.

Moreover the presence of the knuckle projecting from the ham creates problems for the passage of the gouging tool.

Finally it requires the use, made necessary by said operational rigidity, of different types of gouging tool suitable for acting on the sides and on the upper and lower parts of the thighbone respectively.

Notwithstanding this, the known machine operates on the ham in an often imprecise manner, resulting in undesirable crumbling of the meaty mass close to the thighbone.

Further, from EP-A-0 882 404 a gouging machine according to the preamble of claim 1 is known.

An object of the present invention is to provide a machine able to effect automatic gouging of a ham bone in substantially the same manner as a specialized operator, and hence without excessive undesirable crumbling of the meaty mass close to the bone.

Another object of the invention is to provide a machine able to effect said gouging without requiring the intervention of personnel, and hence under conditions of maximum safety.

A further object is to provide a machine able to effect automatic gouging of both right and left hams of any size.

A further object is to provide a gouging machine able to achieve a production rate higher than that achievable by an expert operator.

A further object is to provide a gouging machine able to achieve said results within the context of a simple, rational and reliable construction by using a single type of gouging tool.

Said objects are attained by virtue of the characteristics defined in the claims.

The constructional and operational characteristics and merits of the invention will be apparent from the ensuing detailed description, given with reference to the figures of the accompanying drawings which show a particular preferred embodiment thereof by way of non-limiting example.

Figure 1 is a front elevation of the machine without panelling.

Figure 2 is a section on the line II-II of Figure 1.

Figure 3 is a section on the line III-III of Figure 2.

Figure 4 is an enlarged part of Figure 1.

Figure 5 is a section on the line V-V of Figure 1.

Figure 6 is a front perspective view from above showing the gouging unit in its withdrawn rest configuration.

Figure 7 is a section on the line VII-VII of Figure 6 with the gouging unit shown in its advanced position.

Figure 8 is a section on the line VIII-VIII of Figure 7.

Figure 9 is a section on the line IX-IX of Figure 5.

Figure 10 is a partial view of Figure 5 from above.

Figure 11 is a perspective view showing a variant of the unit for amputating at least the upper part of the knuckle.

Figure 12 is an enlarged detail of Figure 5.

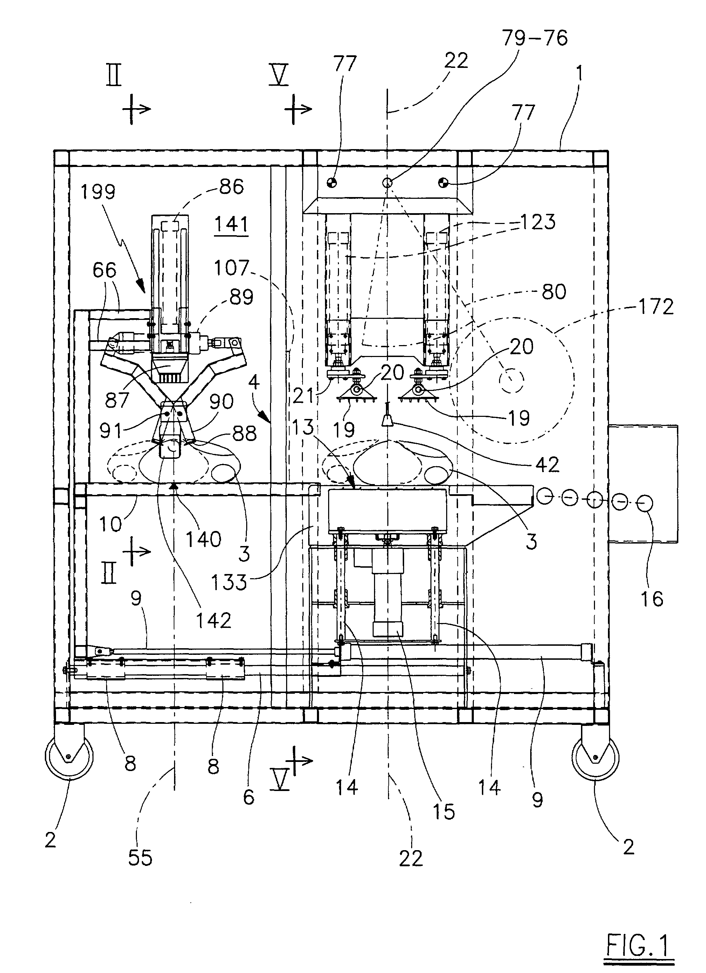

Said figures show a frame 1 mounted on four wheels 2 and defining two mutually perpendicular main vertical planes indicated by 11 in Figure 5 and by 22 in Figure 1.

In particular, the plane 11 is the reference plane for the means for supporting the hams 3 and transferring them between the loading station (to the left in Figure 1) and the discharge station (to the right in Figure 1), and the plane 22 defines the reference plane for the gouging means and contains the axis 33 (see Figure 5) of the gouging unit 99.

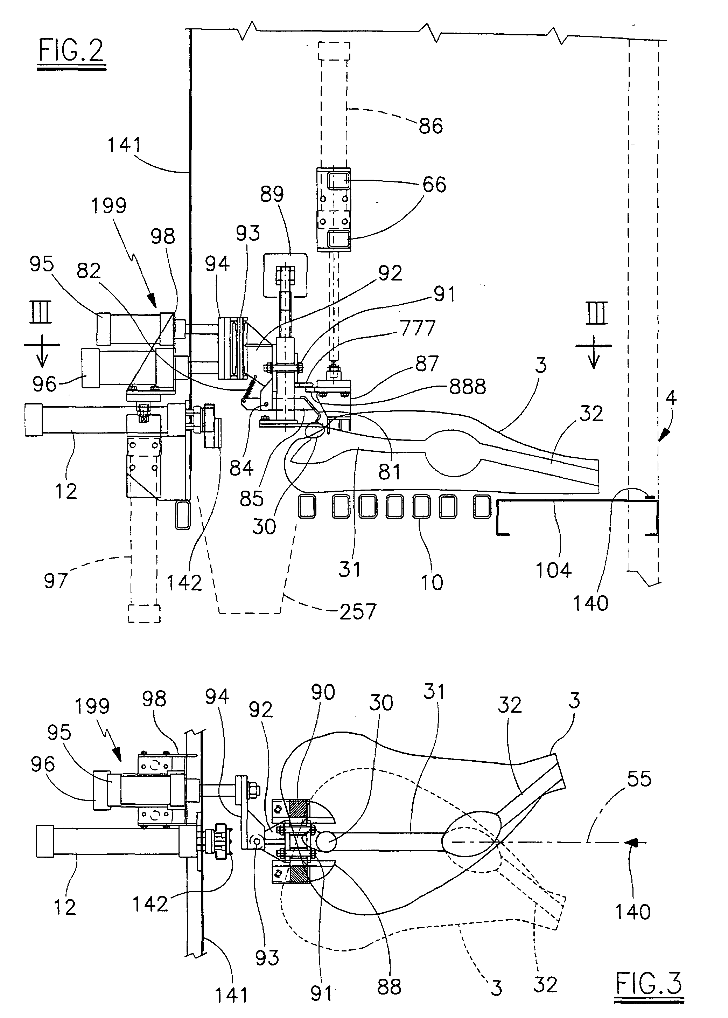

The front part of the machine comprises an aperture 4 (Figures 1 and 2) for loading the hams 3, beyond its lower edge there being a horizontal plate 104.

As can be seen in Figures 1 and 5, in the underlying part of the frame 1 there are two horizontal cylindrical bars 6 which are disposed to the sides of the plane 11, and on which a slider 8 is slidingly mounted, associated with a pneumatic cylinder-piston unit 9.

The slider 8 supports, at the level of the plate 104, an upper platform 10 shaped as a comb with its teeth orientated towards the plane 22 and parallel to the sliding direction of the slider 8.

The lower edge of the aperture 4 presents a pointer 140 (see Figures 1, 2 and 3) which is aligned parallel to the plane 22 with a member 142 for correctly positioning the knuckle 30 of the ham 3 resting on the platform 10.

Said member 142 is slidingly supported by the vertical wall 141 and comprises a channel-shaped piece having its longitudinal axis positioned vertically (Figures 1, 2 and 3), its concavity facing said aperture 4, and its base wall fixed to the rod of a rear pneumatic double-acting cylinder-piston unit 12 of horizontal axis which is fixed behind said wall 141.

As shown in the plan view of the machine (Figure 3), the longitudinal axis of said member 142 and said pointer are contained in a vertical plane 55 parallel to the plane 22.

By means of said member 142, the knuckle 30 and thighbone 31 of the ham 3 are positioned on the platform 10 in the correct position for subsequent intervention of the unit 199 for amputating the knuckle (Figures 1 to 3) and of the gouging unit 99 (Figure 5), the remainder of the bone of the ham 3, i.e. the tibia-fibula portion 32, being located on one or the other side of said plane 55, depending on whether the ham 3 is right or left.

The transverse dimension of the platform 10 is less than the ham length, so that the stem and the opposite end of the ham 3 extend beyond the front and rear sides of the platform 10 respectively.

The amputation unit 199 comprises a vertical slide 98 (Figure 2) situated behind the wall 141 and under the control of a pneumatic double-acting cylinder-piston unit 97, said slide 98 supporting a horizontal pneumatic double acting cylinder-piston unit 96 and an overlying pressure regulator 95.

By way of a suitable vertical slot provided in the wall 141, the rods of said cylinder-piston unit 96 and regulator 95 extend to the front thereof where they are connected to a plate 94 which carries a lateral vertical pin 93 (see Figure 3) on which a support 92 is hinged and supported. Said pin 93 lies in the aforedefined vertical plane 55 (see Figures 1 and 3).

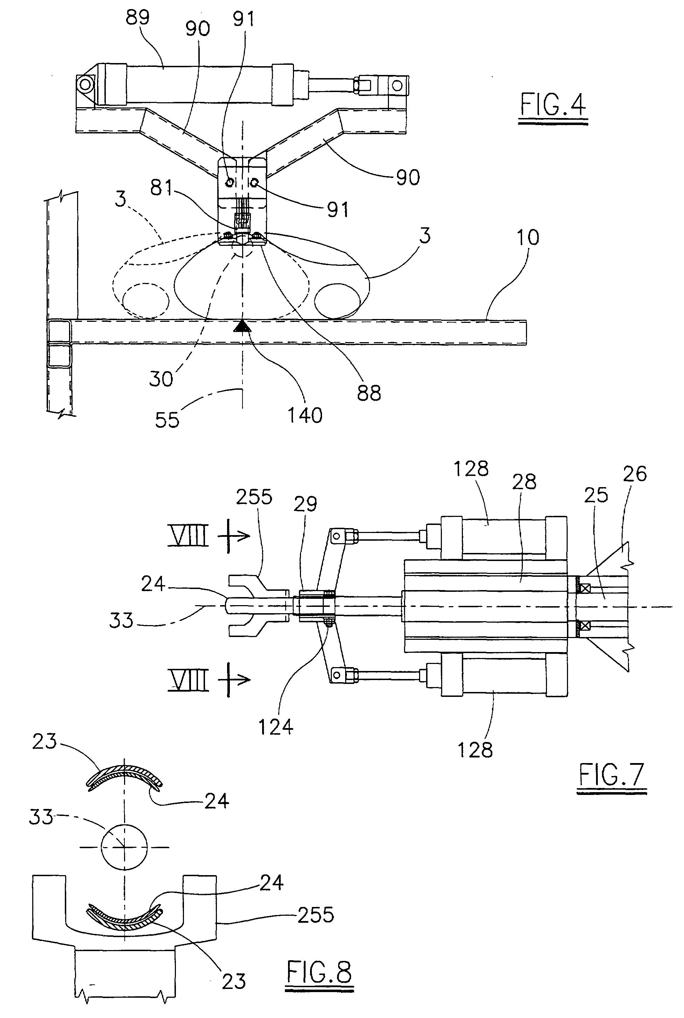

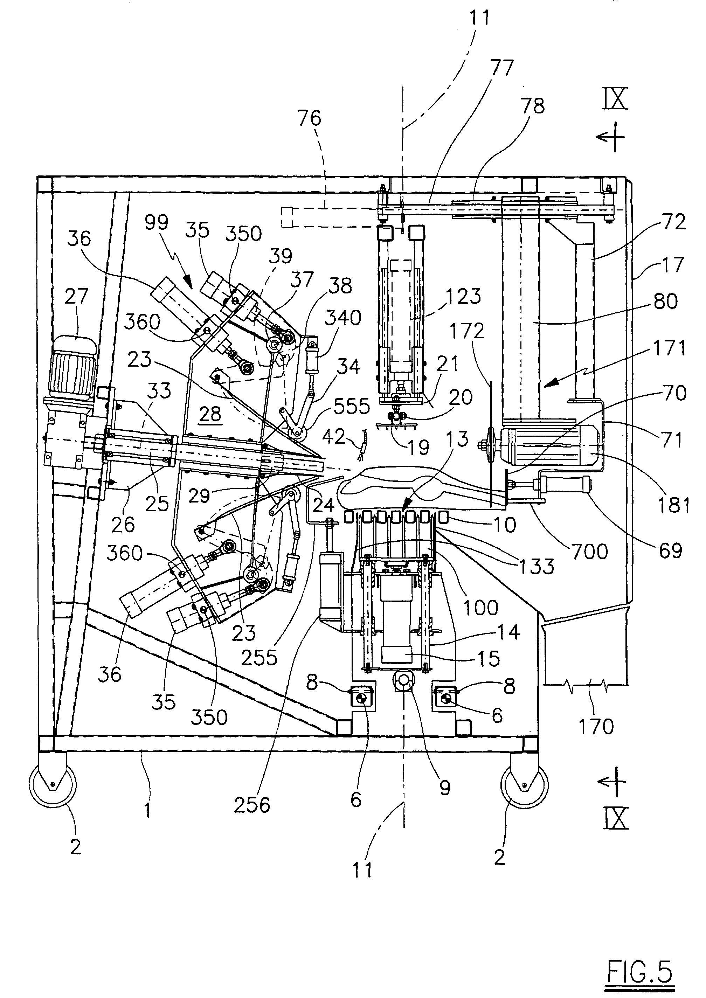

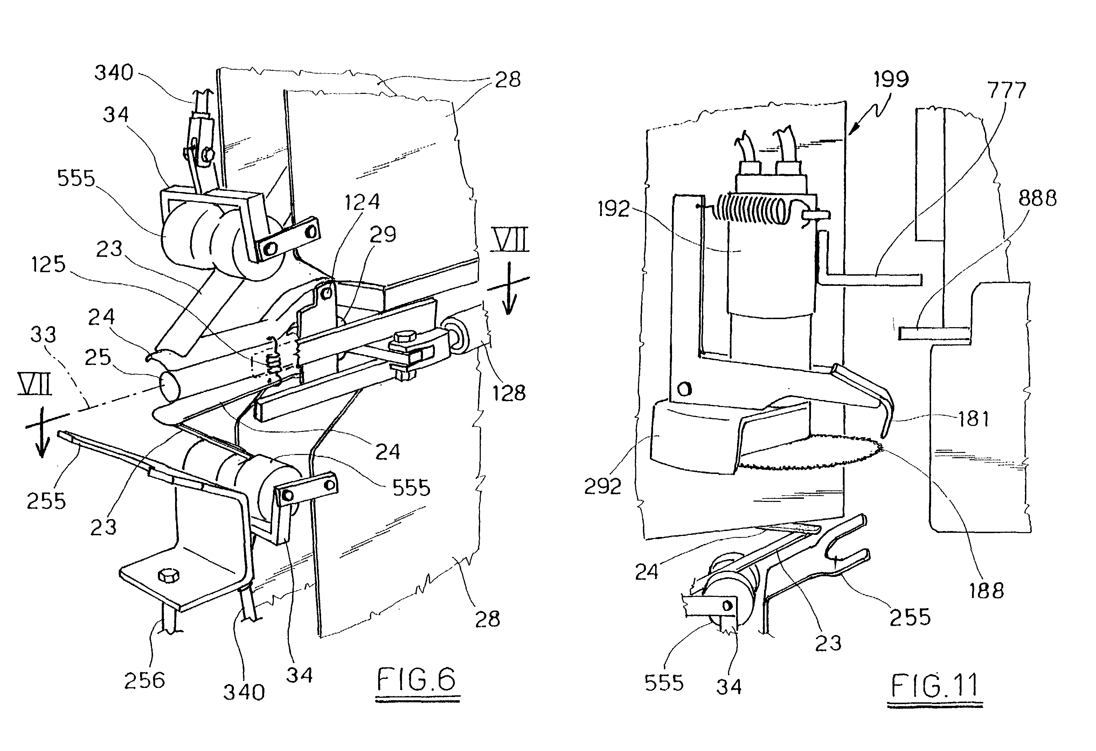

To the support 92 there are pivoted, on two horizontal parallel axes 91 positioned to the sides of said vertical plane 55, two identical profiled arms 90 (Figure 4), of which the upper ends are connected together by a double-acting cylinder-piston unit 89, and the lower ends carry fixed thereto two horizontal blades 88 with their cutting edges facing each other.

Between the lower ends of the arms 90 there is positioned a member for gripping that part of the knuckle 30 which is to be amputated.

The gripping member (see Figures 2 and 4) comprises: an arm 85 which is pivoted in the manner of a rocker arm to the support 92 on the axis 84; a rear return spring 82; and a front scoop 81 which is positioned close to the front end of the blades 88, towards which its concavity faces, it having its lower edge arched and toothed.

The lower front part of the scoop 81 is bent towards the wall 141.

The purpose of the pin 93 is to enable the pair of blades 88 to adapt to the position which the knuckle 30 assumes when the ham 3 is locked on the platform 10 prior to the intervention of the blades 88.

Suitable elastic means are provided to return the blades 88 to their rest position.

A nailed plate 87 guided as shown in Figure 1 is controlled by the pneumatic cylinder-piston unit 86 fixed to a bracket 66 of the frame 1. When the ham 3 has been positioned with the aid of the member 142, the nailed plate 87 is vertically aligned with that end part of the thighbone close to the knuckle 30, and is lowered in order to lock the ham.

To the side of the nailed plate 87 (Figure 2) there is a bracket 888 acting as an end stop for the lowering of the support 92, by means of the resting foot 777.

A sensor is advantageously provided to sense the end of lowering of the nailed plate 87 against the underlying ham 3.

Said sensor senses the position of the knuckle 30, this depending on the size of the ham.

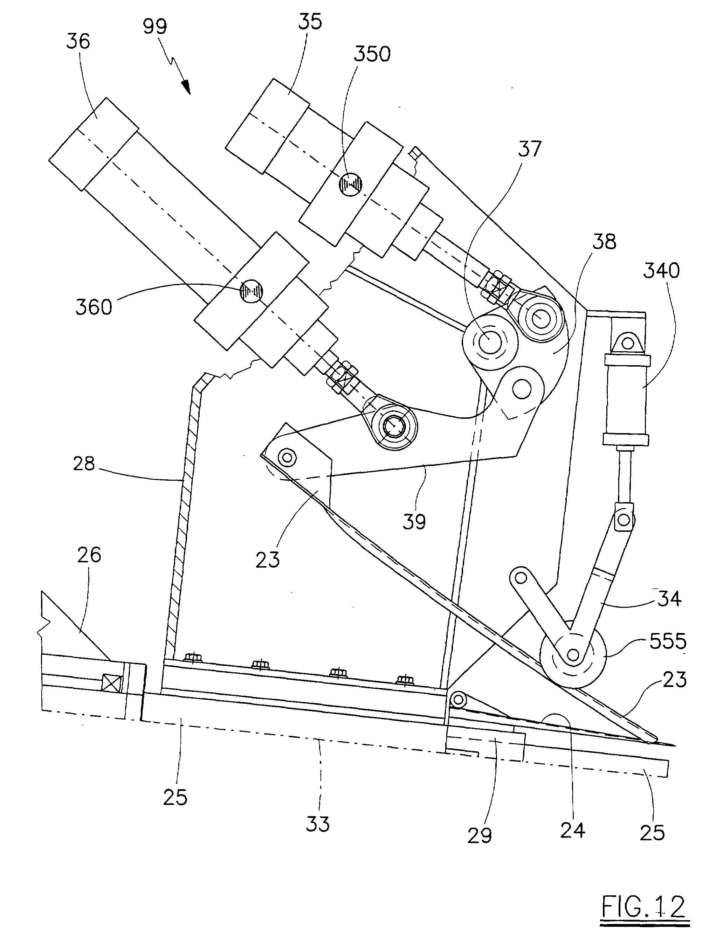

In the alternative embodiment of Figure 11, the amputation unit 199 comprises a motorized thin circular sawtoothed blade which is supported by a support 192 caused to slide vertically and horizontally, as already explained in relation to the support 92.

The disc blade 188 is provided with a frontwardly open cover 292, the gap left by said cover receiving a scoop 181, elastically urged downwards as shown in Figure 11, and provided to hold the knuckle part 30 amputated by the blade 188.

To the side of the platform 10 (see Figure 1) there is an operating table 13 upperly provided with small points or nails, and lowerly provided with four vertical guide bars 14, it being caused to move vertically by the underlying pneumatic cylinder-piston unit 15 (Figures 1 and 5).

On the upper face of the operating table 13 there are provided totally extending grooves 100 (Figure 5) for receiving the teeth of the platform 10.

When the table 13 is in its lowered position its upper face occupies a level lower than that occupied by the platform 10, so that during its travel towards the right in Figure 1 said platform 10 pushes the ham 3, already subjected to gouging, onto the inclined discharge roller table 16.

The depth of the grooves 100 is greater than the vertical dimension of the teeth of the platform 10.

Between the platform 10 and the table 13 there is a shutter 107 (Figure 1) which is made to traverse by a pneumatic double-acting cylinder-piston unit, not shown for simplicity, to isolate the compartment receiving the ham from the gouging compartment.

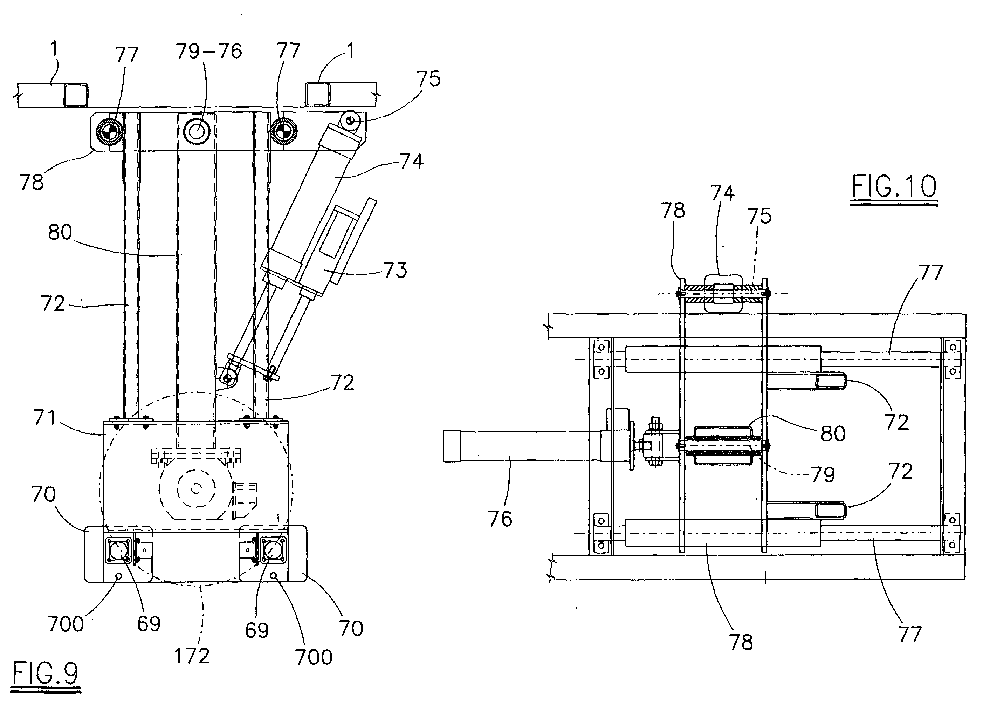

In front of the table 13 (see Figure 5 and Figure 9) there is a cover 17 at which a unit 171 for amputating the shank of the hams 3 is received, and which presents a lower opening for discharging the amputated shanks into a suitable container 170.

Said cutting unit 171 comprises a disc blade 172 of horizontal axis which is directly keyed onto the exit shaft of a self-braking electric motor 181, this latter being fixed to the lower end of an arm 80 arranged to swing in a vertical plane parallel to the plane 11.

In particular, said arm 80 is upperly hinged, on the axis indicated by 79 in Figures 9 and 10, to a slider 78 which is caused by a pneumatic cylinder-piston unit 76 to slide along two horizontal cylindrical bars 77.

To the said slider 78 there is hinged, on the horizontal axis 75, a pneumatic double-acting cylinder-piston unit 74 (with relative pressure regulator 73) which is provided to cause said arm 80 to swivel.

The slider 78 also carries two descending bars 72 which support a member 71 carrying two feelers, each comprising a vertical plate 70 with a guide rod 700, and a rear cylinder-piston unit 69 acting as a transducer connected to the overall PLC control system of the machine.

The operating table 13 is overlaid by a ham locking unit comprising two nailed plates 19 disposed to the sides of the vertical plane 22, and hinged, on respective horizontal axes 20 parallel to said vertical plane 22, to the two plates indicated by 21.

The plates 21 are conveniently guided as shown in Figure 5, their ascending and descending travel being controlled by two pneumatic double-acting cylinder-piston units 123 (Figure 1).

In the illustrated example the machine is provided with two identical gouging tools disposed in diametrically opposite positions about the reference axis 33, but it could instead be provided with a single tool.

Each tool comprises a relatively thin, narrow elongate blade usually known as a gouger, having a slight longitudinal curvature with its concavity facing away from the reference axis 33 of the unit 99 (Figure 5), and has an arched cross-section with its concavity facing said axis 33, and subtending an angle of about 90o (see Figure 8).

The front edge of said blade 23 presents a usual arched profile with a terminal cutting edge.

With the blade or gouger 23 there is associated a thin blade guide 24 which presents a transverse profile matching that of the concave surface of said blade 23 (Figure 8), has a sharp profile at its front end (Figure 6), and is arranged to move along said reference axis 33.

This latter coincides with the longitudinal axis of a shaft 25 rotatably mounted, and axially locked, on a support 26 positioned in the rear region of the machine frame 1 (Figure 5).

Behind the support 26, said shaft 25 is linked to a geared motor unit 27 with two directions of rotation, arranged to subject said shaft 25 to a rotary movement in steps which subtend a fraction of a round angle.

The shaft 25 supports a support structure 28 which extends symmetrically about the sides of the shaft 25, and supports the operating linkages of the gougers 23. A sleeve 29 is arranged to slide along the shaft 25 under the control of two pneumatic double-acting cylinder-piston units 128 fixed to the opposing sides of the support structure 28 (see Figure 7).

The cylinder-piston units 128 are arranged to subject the sleeve 29, during its advancement travel, to a simultaneous sudden to-and-fro movement.

The rear ends of the blade guides 24 (Figure 7) are hinged to the sleeve 29 on respective transverse axes 124, the said blade guides being constantly elastically urged towards the shaft 25 by two lateral springs 125 (see Figure 6), and against respective abutments provided by the said sleeve 29 (Figures 5 and 6).

By virtue of said abutments the blade guides 24 become disposed virtually parallel to the shaft 25 when in the rest state, whereas during the gouging operations they are able to diverge to adapt to the shape of the thighbone 31 of the ham 3.

As shown in Figure 12, the control linkage for the gougers 23 comprises two pneumatic double-acting cylinder-piston units 35 and 36 the casings of which are hinged to the rear outer region of the support structure 28 on axes 350 and 360 perpendicular both to the support structure 28 and to the shaft 25.

The front outer region of the support structure 28 presents a pin 37 which is parallel to said axes 350 and 360, and constitutes the fulcrum of a first rocker lever 38.

One end of the lever 38 is pivoted to the rod of the cylinder-piston unit 35, the other end being pivoted to one end of a second rocker lever 39 which is pivoted to the rod of the cylinder-piston unit 36, its opposite end being pivoted to the rear end of the gouger 23.

Contact between the gouger 23 and the blade guide 24 is maintained by an idle grooved roller 555 (Figures 5 and 6) supported by a profiled frame 34 which rocks about the support structure 28 and is associated with a gas spring 340 also hinged to the support structure 28.

The grooved roller 555 has also the important function of laterally retaining the respective gouger 23.

At the region in which the gougers 23 operate there is situated an overlying nozzle 42 of duck beak shape (Figures 1 and 5), arranged to emit a jet of air which advantageously removes the pieces of bone detached during the amputation of the knuckle 30 and gouging of the thighbone 31.

Behind the operating table 13 there is a meat presser 255, which is vertically slidable under the control of an underlying pneumatic cylinder-piston unit 256, to act on that meat part which extends beyond the knuckle 30 in order to facilitate the wedging of the blade guide 24 and gougers 23, and reduce the amount of meat which remains associated with the bone on termination of the gouging.

The meat presser 255 consists of a concave profiled body, the upper wall of which is shaped as a fork to receive the meat part projecting from the knuckle (see Figure 5).

The described machine operates as follows.

The operator loads a ham 3 flat on the platform 10 so that the knuckle 30 engages the member 142 which is in its advanced position, and disposes the thighbone 31 perpendicular to the teeth of the platform 10.

Having done this the operator starts the operating cycle, which comprises the following operations.

The member 142 is moved to its withdrawn rest position, the nailed plate 87 receives the enabling signal to move downwards as shown in Figure 2, and the raised open blades 88 descend until the foot 777 encounters the bracket 888 and becomes positioned to the sides of the knuckle 30.

The blades 88 then advance until the lower edge of the scoop 81 straddles the knuckle 30, then they halt and finally they close to amputate the knuckle 30 or a part of it.

When the knuckle has been amputated, the entire assembly returns to the starting configuration, and the knuckle 30 falls into an underlying container 257 (see Figure 2).

The aforesaid is valid also for the variant of Figure 11.

At this point the platform 10 advances to dispose the knuckle-free ham 3 to be gouged on the operating table 13, with the thighbone 31 substantially in line with the shaft 25.

The platform 10 halts, the table 13 rises through a small predetermined distance to receive from the platform 10 the ham 3 to be gouged, and the platform 10 returns to its withdrawn starting position.

At this point the plates 19 are lowered to lock the ham 3 on the table 13, then the table 13 is further raised, causing the plates 19 to withdraw until the end of the thighbone 31 has been aligned with the end of the shaft 25. Said operation is controlled by a signal which the said sensor associated with the nailed plate 87, or interposed between said bracket 888 and said foot 777, feeds to the cylinder-piston unit 15 via the machine control system.

When the table 13 has stopped, the meat presser 255 is lowered to expose the end of the thighbone 31. Simultaneously the slider 78, with the blade 172 at rest in the position of Figure 1, slides towards the table 13, by which one of the plates 70, depending on whether the ham is right or left, rests against the shank and slightly withdraws.

Said withdrawal halts the advancement of the slider 78, causes the blade 172 to undergo a complete swing to cut off the shank, sets the direction of rotation of the geared motor 27 according to whether the ham is right or left, and causes subsequent withdrawal of the slider 78.

The cylinder-piston units 128 extend to thrust the blade guide 24 against the thighbone 31, to which they adapt by virtue of the elastic load of the springs 125 and 340 and of the rapid to-and-fro movement which said cylinder-piston units 128 impress on the sleeve 29.

At the same time, the cylinder-piston units 36 extend without interruption to thrust the gougers, via the rocker levers 39, forward so that they extend beyond the blade guides 24 when these latter have passed beyond the knuckle 30, and the cylinder-piston units 35, via the rocker levers 38, adjust the inclination of the gougers 23 to the shaft 25.

Said inclination is a maximum at the commencement of a gouging stage, see the operative position of Figure 12, and a minimum at the end of this stage. When the tips of the gougers 23 reach the joint connecting the thighbone 31 to the tibia-fibula portion 32 (see Figure 3), the blade guides 24 and the gougers 23 return to their withdrawn starting position.

The geared motor 27 then causes the shaft 25 to undergo a predetermined rotation, after which the blade guides 24 and the gougers 23 perform another gouging operation, which takes place as specified above. The gouging terminates after the shaft 25 has travelled through 180°, by which the meat presser 255 returns to its starting position shown in Figure 8.

At this point the aforedescribed complete operating cycle is repeated identically on the next ham.

The merits and advantages of the invention are apparent from the aforegoing and from an examination of the accompanying figures.

## Claims

1. A gouging machine for detaching the meat from the bone of crude hams, comprising, for supporting the ham (3), at least one operating platform (10) arranged to traverse between a position in which the ham is loaded and orientated, and at least one operating station provided to detach the meat from the ham thighbone (31) starting from the knuckle, wherein said operating station comprises height-adjustable ham support means associated with a gouging unit, **characterised by** said gouging unit comprising a support structure (28) which is rotatable about a reference axis (33) and carries at least one gouging tool (23) movable relative to said axis (33) between a withdrawn position in which its tip is spaced from the knuckle, and an advanced position in which said tip extends beyond the knuckle.

2. A machine as claimed in claim 1, **characterised in that** said height-adjustable ham support means are a grooved table (13) associated with the comb-shaped ham platform (10), the teeth (100) of which are inserted into the grooves of the grooved table (13), which have a depth greater than the vertical dimension of said teeth.

3. A machine as claimed in claim 2, **characterised in that** said grooved table is arranged to assume at least two positions, of which one is a lowered position at a fixed level to receive the ham, and one is a raised position the level of which depends on the thickness of the ham being worked, and in which the gouging takes place.

4. A machine as claimed in claim 3, **characterised in that** the support surface for the platform (10) supporting the ham (3) is positioned at a level slightly higher than that occupied by the upper face of the grooved table (13) when in its lowered position with its teeth slackly inserted in the surface grooves of said table, and at a level slightly lower than the grooved table when in its raised position.

5. A machine as claimed in claim 1, **characterised by** comprising a member provided for the correct positioning of the ham when in its loading position on the platform (10).

6. A machine as claimed in claim 5, **characterised in that** said positioning member comprises a concave abutment plate (142) the concavity of which faces the platform (10) when in its loading position, said plate being arranged to move between an active advanced position in which it receives the knuckle, and an inactive withdrawn position in which it is spaced from the knuckle.

7. A machine as claimed in claim 1, **characterised in that** said one gouging tool (23) is associated with means (38, 39) arranged to subject it to a combined movement both parallel to said reference axis and transverse to said axis between a withdrawn position in which its tip is spaced from the knuckle, and an advanced position in which said tip passes beyond the knuckle and reaches substantially the joint between the thighbone and the tibia-fibula.

8. A machine as claimed in claim 1, **characterised in that** said support structure is rigid with a projecting shaft (25) rotatably mounted on the machine frame, and linked to a geared motor unit with two directions of rotation.

9. A machine as claimed in claim 7, **characterised in that** said means comprise a first rocker lever (38) which is pivoted to a point (37) rigid with said shaft, and has one end pivoted to a first operating cylinder-piston unit (35) and its other end pivoted to the end of a second rocker lever (39) which in an intermediate position is pivoted to a second operating cylinder-piston unit (36) and at its opposite end is pivoted to the rear end of said at least one gouging tool (23).

10. A machine as claimed in claim 1, **characterised in that** with said support structure there are associated at least two gouging tools in diametrically opposite positions about the shaft axis.

11. A machine as claimed in claim 8, **characterised in that** slidable but torsionally locked on said shaft there is a sleeve carrying, pivoted thereto, at least one blade guide element maintained elastically urged towards the shaft and acting as a support for the terminal part of the tool, said sleeve being arranged to move between a withdrawn position in which the front end of the blade guide element rests on the ham knuckle, and an advanced position in which it extends beyond said knuckle to prevent the gouging tool jamming against it.

12. A machine as claimed in claim 1, **characterised by** comprising an amputation unit (199) arranged to remove from the ham at least the upper cap of the knuckle prior to the intervention of said at least one gouging tool.

13. A machine as claimed in claim 12, **characterised in that** said amputation unit is located in the ham loading and positioning region on the platform (10) and acts in combination with means for retaining the ham during the removal of said at least the upper cap of the knuckle.

14. A machine as claimed in claim 13, **characterised in that** said means comprise a vertically slidable nailed plate (87) arranged to press against the terminal part of the thighbone close to the knuckle.

15. A machine as claimed in claim 12, **characterised in that** said amputation unit comprises a pair of substantially horizontal blades (88) with mutually facing cutting edges arranged to move with mutual approach and withdrawal movement, and carried by a linkage system (92, 93, 94) arranged to move the pair along two mutually perpendicular directions between a raised rest position and a lowered intervention position in which the blades embrace at least part of the knuckle, to be then closed.

16. A machine as claimed in claim 15, **characterised in that** between said pair of blades and said linkage system there is interposed a vertical hinge pin (93) enabling the blades to adapt elastically to the position of the knuckle.

17. A machine as claimed in claim 12, **characterised in that** said amputation unit comprises a motorized disc blade of virtually vertical axis, carried by a movable member arranged to move along two mutually perpendicular directions, to dispose the blade in an inactive position in which its cutting edge is spaced from the knuckle, and in an active position in which said cutting edge interferes therewith.

18. A machine as claimed in claim 12, **characterised in that** with the cutting means of said amputation unit there is associated a concave retention element arranged to receive that part of the knuckle separated from the thighbone.

19. A machine as claimed in claim 14, **characterised in that** said nailed plate comprises an abutment which determines the working level of the amputation unit.

20. A machine as claimed in claim 14, **characterised in that** said nailed plate is provided with a sensor to sense the level occupied by the knuckle of the ham locked in the loading position, and to feed a signal, via the machine control system, to control the level of the grooved table in front of the gouging station.

21. A machine as claimed in claim 1, **characterised in that** in the gouging station there is provided a fork-shaped meat presser able to slide vertically between a rest position in which it enables the ham to be loaded onto said operating table, and a working position in which it downwardly presses the meaty mass which projects beyond the end of the thighbone of the ham locked on the operating table.

22. A machine as claimed in claim 1, **characterised in that** the gouging station comprises at least one blower nozzle arranged to feed a stream of pressurized air towards the knuckle.

23. A machine as claimed in claim 1, **characterised by** comprising, located in the gouging station, means for cutting off the shank.

24. A machine as claimed in claim 23, **characterised in that** said means comprise a motorized circular blade of horizontal axis supported at the base of a rocker shaft carried by a horizontal slider arranged to move the blade between a distant position in which it enables the ham to be loaded, and a near position in which an abutment positions it relative to the shank to be cut off.

25. A machine as claimed in claim 24, **characterised in that** said abutment is shaped to recognize whether the ham present on the operating table is of right or left configuration, and to determine the direction of rotation of the support structure carrying the at least one gouging tool about said reference axis.

26. A machine as claimed in claim 25, **characterised in that** said abutment comprises two horizontally spaced-apart plates slidingly supported individually by the structure of said blade support slider, via interposed respective transducer means sensitive to the relative sliding between the plates and the structure.

## Patentansprüche

1. Hobelmaschine zum Loslösen das Fleisches vom Knochen der rohen Schinken, die mindestens eine Arbeitsfläche (10) zur Stütze des Schinkens (3) aufweist, die so ausgelegt ist, dass sie sich zwischen einer Position zum Beschicken und Ausrichten des Schinkens und mindestens einer Arbeitsposition, die zum Loslösen des Fleisches vom Oberschenkelknochen (31) des Schinkens, beginnend vom Kniestück, ausgelegt ist, bewegt, wobei diese Bearbeitungsstation höhenverstellbare Mittel zur Stütze des Schinkens aufweist, die mit einer Hobeleinheit verbunden sind, **dadurch gekennzeichnet, dass** die Hobeleinheit eine Halterung (28) aufweist, die um eine Bezugsachse (33) drehbar ist und die mindestens ein Hobelwerkzeug (23) aufweist, das sich in Bezug zu dieser Achse (33) zwischen einer zurückgesetzten Position, in der seine Spitze vom Kniestück entfernt ist, und einer vorgerückten Position, in der seine Spitze das Kniestück überragt, bewegt.

2. Maschine nach Anspruch 1, **dadurch gekennzeichnet, dass** die höhenverstellbaren Vorrichtungen zur Stütze des Schinkens ein gerillter Tisch (13) sind, der mit der kammförmigen Arbeitsfläche (10) zur Stütze des Schinkens verbunden ist und deren Zähne (100) sich in die Rillen des gerillten Tisches (13) einfügen und deren Tiefe die Höhe der Zähne übersteigt.

3. Maschine nach Anspruch 2, **dadurch gekennzeichnet, dass** der gerillte Tisch so ausgelegt ist, dass er mindestens zwei Positionen einnehmen kann, wobei eine der Positionen abgesenkt und feststehend ist, um den Schinken aufzunehmen und eine erhöhte Position, deren Höhe von der Stärke des zu verarbeitenden Schinkens abhängig ist und auf der das Hobeln stattfindet.

4. Maschine nach Anspruch 3, **dadurch gekennzeichnet, dass** die Auflagefläche für die Arbeitsfläche (10) zur Stütze des Schinkens (3) auf einer leicht höheren Ebene eingerichtet ist als die, die von der Oberseite des gerillten Tisches (13) in abgesenkter Position eingenommen wird, mit den Zähnen, die sich mit Spiel in die Oberflächenrillen des Tisches einfügen, und in einer leicht niedrigeren Ebene als die Ebene des gerillten Tisches, wenn er sich in erhöhter Position befindet.

5. Maschine nach Anspruch 1, **dadurch gekennzeichnet, dass** sie ein Bauteil aufweist, das für die korrekte Ausrichtung des Schinkens sorgt, wenn er sich in Beschickungsposition auf der Arbeitsfläche (10) befindet.

6. Maschine nach Anspruch 5, **dadurch gekennzeichnet, dass** dieses Bauteil zur Ausrichtung eine konkave Anschlagplatte (142) aufweist, deren Konkavität in Richtung der Arbeitsfläche (10) in Beschickungsposition ausgerichtet ist und die Platte so ausgelegt ist, dass sie sich zwischen einer aktiven, vorgerückten Position, in der sie das Kniestück empfängt und einer inaktiven zurückgesetzen Position, in der sie vom Kniestück entfernt ist, bewegt.

7. Maschine nach Anspruch 1, **dadurch gekennzeichnet, dass** das Hobelwerkzeug (23) mit Mitteln (38, 39) verbunden ist, die so ausgerichtet sind, dass sie ihm eine kombinierte Bewegung vorgeben, die sich sowohl parallel zu der Bezugsachse als auch quer zu dieser Achse vollzieht, und zwar zwischen einer zurückgesetzten Position, in der seine Spitze vom Kniestück entfernt ist und einer vorgerückten Position, in der diese Spitze das Kniestück überragt und grundsätzlich das Verbindungsglied zwischen Oberschenkelknochen und Schienbein-Wadenbein erreicht.

8. Maschine nach Anspruch 1, **dadurch gekennzeichnet, dass** die Halterung mit einer überhängend angeordneten Welle (25) ein gemeinsames Teil bildet, wobei die Welle drehbar auf den Maschinenrahmen montiert ist und mit einem Getriebemotor mit zwei Drehrichtungen verbunden ist.

9. Maschine nach Anspruch 7, **dadurch gekennzeichnet, dass** die Mittel einen ersten Kipphebel (38) umfassen, der an einen, mit der Welle ein gemeinsames Teil bildenden Punkt (37) angelenkt ist und ein Ende davon an eine erste Zylinder-Kolbeneinheit (35) angelenkt ist und das andere Ende an das Ende eines zweiten Kipphebels (39) angelenkt ist, der in einer mittleren Position an eine zweite Zylinder-Kolbeneinheit (36) angelenkt ist und an seinem gegenüberliegendem Ende an das hintere Ende von mindestens einem Hobelwerkzeug (23) angelenkt ist.

10. Maschine nach Anspruch 1, **dadurch gekennzeichnet, dass** an diese Halterung mindestens zwei Hobelwerkzeuge in diametral entgegengesetzter Position zur Achse der Welle angegliedert sind.

11. Maschine nach Anspruch 8, **dadurch gekennzeichnet, dass** sich auf der Welle eine verschiebbare jedoch torsionsgesperrte Muffe befindet, an der mindestens eine Messerklingenführung angelenkt ist, die elastisch gegen die Welle gehalten wird und so ausgelegt ist, dass sie als Stütze für das Endstück des Werkzeuges dient, wobei die Muffe aus ausgelegt ist, dass sie sich zwischen einer zurückgesetzten Position bewegt, in der sich das vordere Endstück der Messerklingenführung auf das Kniestück des Schinkens stützt, und einer vorgerückten Position, in der es das Kniestück überragt, um zu verhindern, dass sich das Hobelwerkzeug dagegen verkantet.

12. Maschine nach Anspruch 1, **dadurch gekennzeichnet, dass** sie eine Schneideeinheit (199) aufweist, sie so ausgelegt ist, dass sie, vor dem Eingriff von mindestens einem der Hobelwerkzeuge, von dem Schinken mindestens die obere Kappe des Kniestückes entfernt.

13. Maschine nach Anspruch 12, **dadurch gekennzeichnet, dass** sich die Schneideeinheit auf dem Arbeitstisch (10) im Beschickungs- und Ausrichtungsbereich des Schinkens befindet und in Verbindung mit Mitteln funktioniert, die so ausgelegt sind, dass sie den Schinken festhalten, während mindestens die obere Kappe des Kniestückes entfernt wird.

14. Maschine nach Anspruch 13, **dadurch gekennzeichnet, dass** diese Mittel eine senkrecht verschiebbare genagelte Platte (87) umfassen, sie so ausgelegt ist, dass sie gegen das Endstück des Oberschenkelknochens in der Nähe des Kniestückes drückt.

15. Maschine nach Anspruch 12, **dadurch gekennzeichnet, dass** die Schneideeinheit ein Paar grundsätzlich waagerechte Messer (88) mit gegenüberliegenden Schneidkanten aufweist, die so ausgelegt sind, dass sie sich mit einer Bewegung gegenseitiger Annäherung und Entfernung bewegen und von einem Getriebesystem (92, 93, 94) getragen werden, das so ausgelegt ist, dass das Messerpaar sich entlang zweier rechtwinklig gegenüberliegenden Richtungen bewegt und zwar zwischen einer erhöhten Ruheposition und einer abgesenkten Eingriffsposition, in der die Messer mindestens teilweise das Kniestückes umfassen, um sich anschließend zu schließen.

16. Maschine nach Anspruch 15, **dadurch gekennzeichnet, dass** zwischen dem Messerpaar und dem Getriebesystem eine senkrechte Gelenkachse (93) eingerichtet ist, die so ausgelegt ist, dass sie den Messern ermöglicht, sich elastisch der Position des Kniestückes anzupassen.

17. Maschine nach Anspruch 12, **dadurch gekennzeichnet, dass** die Schneideeinheit eine motorbetriebene Messerscheibe mit einer virtuellen senkrechten Achse aufweist, die von einem beweglichen Bauteil getragen wird, das so ausgerichtet ist, dass es sich entlang zweier rechtwinklig gegenüberliegenden Richtungen bewegt, um die Scheibe in eine inaktive Position zu bringen, in der ihre Schneidkante vom Kniestück entfernt ist und in eine aktive Position, in der ihre Schneidkante auf das Kniestück trifft.

18. Maschine nach Anspruch 12, **dadurch gekennzeichnet, dass** die Schneidemittel der Schneideeinheit mit einem konkaven Aufnahmeelement verbunden sind, das so ausgelegt ist, dass es den vom Oberschenkelknochen entfernten Teil des Kniestückes aufnimmt.

19. Maschine nach Anspruch 14, **dadurch gekennzeichnet, dass** die genagelte Platte einen Anschlag aufweist, der die Arbeitshöhe der Schneideeinheit bestimmt.

20. Maschine nach Anspruch 14, **dadurch gekennzeichnet, dass** die genagelte Platte mit einem Sensor ausgestattet ist, der so ausgelegt ist, dass er die Höhe feststellt, auf der sich das Kniestück des in der Beschickungsposition festgehaltenen Schinkens befindet und über das Kontrollsystem der Maschine ein Signal weiterleitet, mit dem die Höhe des gerillten Arbeitstisches gegenüber der Hobelstation kontrolliert wird.

21. Maschine nach Anspruch 1, **dadurch gekennzeichnet, dass** in der Hobelstation ein gabelförmiges Fleischpressorgan vorgesehen ist, das so ausgelegt ist, dass es sich senkrecht bewegt und zwar zwischen einer Ruheposition, in der es die Beschickung des Arbeitstisches mit dem Schinken ermöglicht, und einer Arbeitsposition, in der es die Fleischmasse, die über den Oberschenkelknochenkopf des auf dem Arbeitstisch festgehaltenen Schinkens hinausragt, nach unten drückt.

22. Maschine nach Anspruch 1, **dadurch gekennzeichnet, dass** die Hobelstation mindestens eine Blasdüse aufweist, die so ausgelegt ist, dass sie einen Druckluftstrom in Richtung des Kniestückes entsendet.

23. Maschine nach Anspruch 1, **dadurch gekennzeichnet, dass** sie in der Hobelstation Schneidemittel zum Abschneiden des Unterschenkels aufweist.

24. Maschine nach Anspruch 23, **dadurch gekennzeichnet, dass** die Mittel eine motorbetriebene Messerscheibe mit waagerechter Achse aufweisen, die am Sockel einer von einem waagrechten Läufer getragenen Schwingachse gestützt wird und so ausgelegt ist, dass er die Messerscheibe bewegt und zwar zwischen einer entfernten Position, in der die Beschickung mit dem Schinken ermöglicht wird, und einer angenäherten Position, in der sie sich, dank eines Anschlags, neben dem abzuschneidenden Unterschenkel positioniert.

25. Maschine nach Anspruch 24, **dadurch gekennzeichnet, dass** der Anschlag so ausgelegt ist, dass er die rechte oder linke Konfiguration des auf dem Arbeitstisch vorhandenen Schinkens erkennt und die Drehrichtung der Halterung, die mindestens ein Hobelwerkzeug trägt, um die Bezugsachse steuert.

26. Maschine nach Anspruch 25, **dadurch gekennzeichnet, dass** der Anschlag zwei waagerecht distanzierte Platten aufweist, die einzeln verschiebbar von der Struktur des messerscheibentragenden Läufers gestützt werden, wobei entsprechende Umformer, die für das wechselseitige Verschieben zwischen Platte und Struktur sensibel sind, zwischengeschaltet sind.

## Revendications

1. Machine de creusement à gouge destinée à séparer la viande de l'os de jambons crus, comprenant, pour le support du jambon (3), au moins une plate-forme de manoeuvre (10) destinée à se déplacer entre une position dans laquelle le jambon est chargé et orienté, et au moins un poste de manoeuvre destiné à la séparation de la viande du fémur (31) du jambon, depuis le jambonneau, dans laquelle le poste de manoeuvre comprend un dispositif de support de jambon réglable en hauteur associé à une unité de creusement à gouge, **caractérisée en ce que** l'unité de creusement à gouge comporte une structure de support (28) qui peut tourner autour d'un axe de référence (33) et qui porte au moins un outil (23) de creusement à gouge qui est mobile par rapport à l'axe (33) entre une position reculée dans laquelle son extrémité est distante du jambonneau, et une position avancée dans laquelle cette extrémité s'étend au-delà du jambonneau.

2. Machine selon la revendication 1, **caractérisée en ce que** le dispositif de support de jambon réglable en hauteur comporte une table (13) à gorges associée à une plate-forme (10) de support de jambon en forme de peigne dont les dents (100) sont insérées dans les gorges de la table à gorges (13) qui ont une profondeur supérieure à la dimension verticale des dents.

3. Machine selon la revendication 2, **caractérisée en ce que** la table à gorges est destinée à prendre au moins deux positions dont l'une est une position abaissée à un niveau fixe pour la mise en place du jambon, et une autre est une position levée dont le niveau dépend de l'épaisseur du jambon travaillé et dans laquelle le creusement par la gouge est réalisé.

4. Machine selon la revendication 3, **caractérisée en ce que** la surface de support de la plate-forme (10) qui supporte le jambon (3) est disposée à un niveau légèrement supérieur à celui qui est occupé par la face supérieure de la table à gorges (13) lorsqu'elle est en position abaissée avec ses dents insérées avec du jeu dans les gorges de surface de la table, et à un niveau légèrement inférieur à celui de la table à gorges dans la position levée.

5. Machine selon la revendication 1, **caractérisée en ce qu'**elle comporte un organe destiné à assurer le positionnement convenable du jambon lorsqu'il occupe sa position de chargement sur la plate-forme (10).

6. Machine selon la revendication 5, **caractérisée en ce que** l'organe de positionnement comporte une plaque concave de butée (142) dont la concavité est tournée vers la plate-forme (10) lorsqu'elle est dans sa position de chargement, la plaque étant destinée à se déplacer entre une position active avancée dans laquelle elle coopère avec le jambonneau, et une position reculée inactive dans laquelle elle est à distance du jambonneau.

7. Machine selon la revendication 1, **caractérisée en ce que** l'outil (23) de creusement à gouge est associé à un dispositif (38, 39) destiné à lui faire subir un mouvement combiné à la fois parallèle à l'axe de référence et transversal à cet axe entre une position reculée dans laquelle son extrémité est distante du jambonneau, et une position avancée dans laquelle l'extrémité passe au-delà du jambonneau et atteint pratiquement l'articulation formée entre le fémur et le tibia-péroné.

8. Machine selon la revendication 1, **caractérisée en ce que** la structure de support est rigide avec un arbre (25) en saillie monté afin qu'il puisse tourner sur le châssis de la machine et relié à une unité à moteur et réducteur ayant deux sens de rotation.

9. Machine selon la revendication 7, **caractérisée en ce que** ledit dispositif comporte un premier levier basculant (38) qui pivote en un point (37) fixé rigidement à l'arbre et a une première extrémité qui peut pivoter sur une première unité à cylindre et piston de manoeuvre (35) et une autre extrémité qui peut pivoter à l'extrémité d'un second levier basculant (39) qui, dans une position intermédiaire, peut pivoter vers une seconde unité à cylindre et piston de manoeuvre (36) et, à son extrémité opposée, peut pivoter sur l'extrémité arrière de l'outil de creusement à gouge (23) au moins.

10. Machine selon la revendication 1, **caractérisée en ce qu'**au moins deux outils de creusement à gouge sont associés à la structure de support à des positions diamétralement opposées par rapport à l'axe de l'arbre.

11. Machine selon la revendication 8, **caractérisée en ce qu'**un manchon, qui peut coulisser sur l'arbre mais est bloqué en torsion par rapport à celui-ci, supporte, de manière pivotante, au moins un élément de guidage de lame toujours rappelé élastiquement vers l'arbre et agissant comme support de la partie terminale de l'outil, le manchon étant destiné à se déplacer entre une position reculée dans laquelle l'extrémité avant de l'élément de guidage de lame est en appui sur le jambonneau, et une position avancée dans laquelle il s'étend au-delà du jambonneau pour empêcher un coincement de l'outil de creusement à gouge contre lui.

12. Machine selon la revendication 1, **caractérisée en ce qu'**elle comporte une unité (199) d'amputation destinée à retirer du jambon au moins le chapeau supérieur du jambonneau avant l'intervention de l'outil de creusement à gouge au moins.

13. Machine selon la revendication 12, **caractérisée en ce que** l'unité d'amputation est disposée dans la région de chargement et de positionnement de jambon sur la plate-forme (10) et agit en combinaison avec le dispositif de retenue du jambon pendant l'enlèvement du chapeau supérieur au moins du jambonneau.

14. Machine selon la revendication 13, **caractérisée en ce que** ledit dispositif comporte une plaque (87) à clous qui peut coulisser verticalement et qui est destinée à exercer une pression contre la partie terminale du fémur à proximité du jambonneau.

15. Machine selon la revendication 12, **caractérisée en ce que** l'unité d'amputation comporte une paire de lames (88) pratiquement horizontales ayant des bords de coupe en regard et destinées à se déplacer par un mouvement mutuel de rapprochement et d'écartement, et supportée par un système à tringlerie (92, 93, 94) destiné à déplacer la paire le long de deux directions perpendiculaires mutuellement entre une position levée de repos et une position abaissée d'intervention dans laquelle les lames entourent une partie au moins du jambonneau, de sorte qu'elles sont alors fermées.

16. Machine selon la revendication 15, **caractérisée en ce qu'**une broche verticale d'articulation (93) qui permet aux lames de s'adapter élastiquement à la position du jambonneau est disposée entre la paire de lames et le système à tringlerie.

17. Machine selon la revendication 12, **caractérisée en ce que** l'unité d'amputation comporte une lame sous forme d'un disque à moteur d'axe pratiquement vertical, portée par un organe mobile destiné à se déplacer suivant deux directions perpendiculaires mutuellement afin que la lame soit disposée en position inactive dans laquelle son bord de coupe est distant du jambonneau et en position active dans laquelle le bord de coupe agit sur celui-ci.

18. Machine selon la revendication 12, **caractérisée en ce qu'**un élément concave de retenue, destiné à loger la partie de jambonneau séparée du fémur, est associée au dispositif de coupe de l'unité d'amputation.

19. Machine selon la revendication 14, **caractérisée en ce que** la plaque à clous comporte une butée qui détermine le niveau de travail de l'unité d'amputation.

20. Machine selon la revendication 14, **caractérisée en ce que** la plaque à clous comporte un capteur destiné à détecter le niveau occupé par le jambonneau du jambon bloqué en position de chargement, et à transmettre, par l'intermédiaire du système de commande de la machine, un signal de commande du niveau de la table à gorges devant le poste de creusement à gouge.

21. Machine selon la revendication 1, **caractérisée en ce qu'**un organe de pression de viande en forme de fourche est disposé au poste de creusement à gouge et peut coulisser verticalement entre une position de repos dans laquelle il permet le chargement du jambon sur la table de manoeuvre, et une position de travail dans laquelle il exerce une pression vers le bas sur la masse de viande qui dépasse au-delà de l'extrémité du fémur du jambon bloqué sur la table de manoeuvre.

22. Machine selon la revendication 1, **caractérisée en ce que** le poste de creusement à gouge comporte au moins une buse de ventilateur destinée à transmettre un courant d'air comprimé vers le jambonneau.

23. Machine selon la revendication 1, **caractérisée en ce qu'**elle comprend, placé au poste de creusement à gouge, un dispositif de coupe du manche.

24. Machine selon la revendication 23, **caractérisée en ce que** ledit dispositif comporte une lame circulaire à moteur d'axe horizontal supportée à la base d'un arbre basculant porté par un coulisseau horizontal destiné à déplacer la lame entre une position distante dans laquelle elle permet le chargement du jambon et une position proche dans laquelle une butée la positionne par rapport au manche à couper.

25. Machine selon la revendication 24, **caractérisée en ce que** la butée a une configuration permettant de reconnaître si le jambon présent sur la table de manoeuvre a une configuration à droite ou à gauche, et à déterminer le sens de rotation de la structure de support portant l'outil de creusement à gouge au moins autour de l'axe de référence.

26. Machine selon la revendication 25, **caractérisée en ce que** la butée comprend deux plaques espacées horizontalement supportées afin qu'elles coulissent individuellement sur la structure du coulisseau de support de lame par l'intermédiaire d'un dispositif transducteur respectif interposé sensible au coulissement relatif entre les plaques et la structure.
